# EUROPEAN PATENT APPLICATION

(11) **EP 4 549 716 A1**
(43) Date of publication of application: **07.05.2025**
(21) Application number: 24208468.9
(22) Date of filing: 23.10.2024
(51) Int. Cl.: F02C 7/14, B64D 33/08, F02C 7/22

(54) **AIRCRAFT SYSTEM HAVING A THERMAL MANAGEMENT SYSTEM**

(30) Priority: 03.11.2023 IT 202300023157; 13.08.2024 US 202418802001
(71) Applicant: GE Avio S.r.l., 10040 Rivalta di Torino (TO) (IT)
(72) Inventor: MARTINA, Vincenzo, 10040 Rivalta di Torino (IT); AZZINI, Lucia, 10040 Rivalta di Torino (IT); COUTANDIN, Daniele, 10040 Rivalta di Torino (IT)
(74) Representative: Openshaw & Co.

(57) **Abstract**

An aircraft system (300) including: a gas turbine engine (310); a fuel system (304) having a fuel tank (312) and a fuel delivery system (314) fluidly connecting the fuel tank (312) to the gas turbine engine (310); an electric drive assembly (306) including a component module (318); and a thermal management system (308) including: a thermal fluid loop (320); a heat source heat exchanger (322) in thermal communication with the component module (318) and the thermal fluid loop (320); an airflow heat sink heat exchanger (324) in thermal communication with the thermal fluid loop (320) and further configured to be in thermal communication with a cooling airflow (332) during operation of the gas turbine engine (310); and a fuel heat sink heat exchanger (326) in selective thermal communication with the thermal fluid loop (320), the fuel tank (312), or both, the fuel heat sink heat exchanger (326) in fluid communication with the fuel tank (312) independently of the fuel delivery system (314) during at least a first operating condition.

## Description

### PRIORITY INFORMATION

The present application claims priority to Italian Patent Application Serial Number 102023000023157 filed on November 3, 2023.

### FIELD

The present disclosure relates to an aircraft system having a thermal management system, and a method of controlling the same.

### BACKGROUND

A conventional commercial aircraft generally includes a fuselage, a pair of wings, and a propulsion system that produces thrust. Such propulsion systems typically include at least two aircraft engines, such as turbofan jet engines. Each turbofan jet engine is typically mounted to one of the wings of the aircraft, such as in a suspended position beneath the wing separated from the wing and fuselage.

Hybrid electric propulsion systems are being developed to improve the efficiency of such conventional commercial aircraft. Hybrid electric propulsion systems typically include one or more propulsors. A propulsor can include an electric machine operatively coupled with an aircraft engine, for example. While many advances have been achieved, further efficiency improvements and integrated solutions for propulsors of hybrid electric propulsion systems are desirable.

### BRIEF DESCRIPTION OF THE DRAWINGS

A full and enabling disclosure of the present disclosure, including the best mode thereof, directed to one of ordinary skill in the art, is set forth in the specification, which makes reference to the appended figures, in which:
FIG. 1 provides a schematic top view of an aircraft according to various exemplary embodiments of the present disclosure.
FIG. 2 provides a schematic view of a gas turbine engine in accordance with an exemplary aspect of the present disclosure.
FIG. 3A provides a schematic view of an aircraft system in accordance with an exemplary aspect of the present disclosure.
FIG. 3B provides a schematic view of an aircraft system in accordance with another exemplary aspect of the present disclosure.
FIG. 4A provides a schematic view of an aircraft system in accordance with yet another exemplary aspect of the present disclosure.
FIG. 4B provides a schematic view of an aircraft system in accordance with still another exemplary aspect of the present disclosure.
FIG. 5 provides a schematic view of an aircraft system in accordance with yet another exemplary aspect of the present disclosure.
FIG. 6 provides a schematic view of an aircraft system in accordance with still another exemplary aspect of the present disclosure.
FIG. 7 provides a flow diagram of a method of operating an aircraft system in accordance with an exemplary aspect of the present disclosure.
FIG. 8 provides a schematic view of a gas turbine engine in accordance with another exemplary aspect of the present disclosure.
FIG. 9 provides a schematic view of a gas turbine engine in accordance with yet another exemplary aspect of the present disclosure.

### DETAILED DESCRIPTION

Reference will now be made in detail to present embodiments of the disclosure, one or more examples of which are illustrated in the accompanying drawings. The detailed description uses numerical and letter designations to refer to features in the drawings. Like or similar designations in the drawings and description have been used to refer to like or similar parts of the disclosure.

The word "exemplary" is used herein to mean "serving as an example, instance, or illustration." Any implementation described herein as "exemplary" is not necessarily to be construed as preferred or advantageous over other implementations. Additionally, unless specifically identified otherwise, all embodiments described herein should be considered exemplary.

The singular forms "a", "an", and "the" include plural references unless the context clearly dictates otherwise.

The term "at least one of" in the context of, e.g., "at least one of A, B, and C" refers to only A, only B, only C, or any combination of A, B, and C.

The term "turbomachine" refers to a machine including one or more compressors, a heat generating section (e.g., a combustion section), and one or more turbines that together generate a torque output.

The term "gas turbine engine" refers to an engine having a turbomachine as all or a portion of its power source. Example gas turbine engines include turbofan engines, turboprop engines, turbojet engines, turboshaft engines, etc., as well as hybrid-electric versions of one or more of these engines.

The term "combustion section" refers to any heat addition system for a turbomachine. For example, the term combustion section may refer to a section including one or more of a deflagrative combustion assembly, a rotating detonation combustion assembly, a pulse detonation combustion assembly, or other appropriate heat addition assembly. In certain example embodiments, the combustion section may include an annular combustor, a can combustor, a cannular combustor, a trapped vortex combustor (TVC), or other appropriate combustion system, or combinations thereof.

As used herein, the terms "first", "second", and "third" may be used interchangeably to distinguish one component from another and are not intended to signify location or importance of the individual components.

The present disclosure is generally related to an aircraft system having an electric drive assembly and a thermal management system capable of managing a thermal load of the electric drive system across a variety of operating conditions through use of an auxiliary thermal sink. More specifically, the aircraft system of the present disclosure includes a gas turbine engine, a fuel system having a fuel tank and a fuel delivery system fluidly connecting the fuel tank to the gas turbine engine, the electric drive assembly having a component module; and the thermal management system. The thermal management system includes a thermal fluid loop, a heat source heat exchanger in thermal communication with the component module and the thermal fluid loop, and an airflow heat sink heat exchanger in thermal communication with the thermal fluid loop and further configured to be in thermal communication with a cooling airflow during operation of the gas turbine engine. Moreover, the thermal management system of the present disclosure further includes a fuel heat sink heat exchanger in selective thermal communication with the thermal fluid loop, the fuel tank, or both. The fuel heat sink heat exchanger is in fluid communication with the fuel tank independently of the fuel delivery system during at least a first operating condition.

In such a manner, it will be appreciated that the airflow heat sink heat exchanger may be configured to provide a desired amount of heat rejection for the thermal management system to maintain a temperature of the component module of the electric drive system within a desired operating temperature range during certain operating conditions (e.g., cruise). However, when an insufficient mass flowrate of airflow to the airflow heat sink heat exchanger is available, when the component module is generating a high amount of heat, or both, the thermal management system may thermally connect the thermal loop to a fuel flow via the fuel heat sink heat exchanger to transfer heat to the fuel flow and supplement the heat rejection of the airflow heat sink heat exchanger.

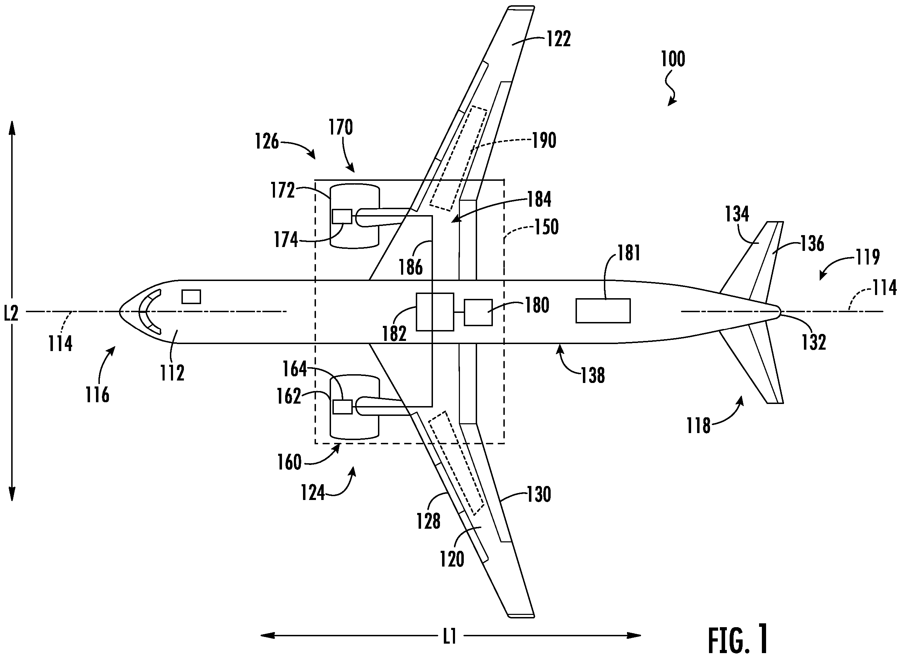

Referring now to the drawings, wherein identical numerals indicate the same elements throughout the figures, FIG. 1 provides a schematic top view of an exemplary aircraft 100 as may incorporate various embodiments of the present disclosure. As shown in FIG. 1, for reference, the aircraft 100 defines a longitudinal direction L1 and a lateral direction L2. The aircraft 100 also defines a longitudinal centerline 114 that extends therethrough along the longitudinal direction L1. The aircraft 100 extends between a forward end 116 and an aft end 118, e.g., along the longitudinal direction L 1. Moreover, the aircraft 100 includes a fuselage 112 that extends longitudinally from the forward end 116 of the aircraft 100 to the aft end 118 of the aircraft 100. The aircraft 100 also includes an empennage 119 at the aft end 118 of the aircraft 100. In addition, the aircraft 100 includes a wing assembly including a first, port side wing 120 and a second, starboard side wing 122. The first and second wings 120, 122 each extend laterally outward with respect to the longitudinal centerline 114. The first wing 120 and a portion of the fuselage 112 together define a first side 124 of the aircraft 100 and the second wing 122 and another portion of the fuselage 112 together define a second side 126 of the aircraft 100. For the embodiment depicted, the first side 124 of the aircraft 100 is configured as the port side of the aircraft 100 and the second side 126 of the aircraft 100 is configured as the starboard side of the aircraft 100.

The aircraft 100 includes various control surfaces. For this embodiment, each wing 120, 122 includes one or more leading edge flaps 128 and one or more trailing edge flaps 130. The aircraft 100 further includes, or more specifically, the empennage 119 of the aircraft 100 includes a vertical stabilizer 132 having a rudder flap (not shown) for yaw control and a pair of horizontal stabilizers 134 each having an elevator flap 136 for pitch control. The fuselage 112 additionally includes an outer surface or skin 138. It should be appreciated that in other exemplary embodiments of the present disclosure, the aircraft 100 may additionally or alternatively include any other suitable configuration. For example, in other embodiments, the aircraft 100 may include any other control surface configuration.

The exemplary aircraft 100 of FIG. 1 also includes a hybrid-electric propulsion system 150. For this embodiment, the hybrid-electric propulsion system 150 has a first propulsor 160 and a second propulsor 170 both operable to produce thrust. The first propulsor 160 is mounted to the first wing 120 and the second propulsor 170 is mounted to the second wing 122. Moreover, for the embodiment depicted, the first propulsor 160 and second propulsor 170 are each configured in an underwing-mounted configuration. However, in other example embodiments, one or both of the first and second propulsors 160, 170 may in other exemplary embodiments be mounted at any other suitable location.

The first propulsor 160 includes a gas turbine engine 162 and an electric machine 164 operatively coupled with the gas turbine engine 162. The electric machine 164 can be an electric generator, an electric motor, or a combination generator/motor. For this example embodiment, the electric machine 164 is a combination generator/motor. In this manner, when operating as an electric generator, the electric machine 164 can generate electrical power when driven by the gas turbine engine 162. When operating as an electric motor, the electric machine 164 can drive or motor a fan spool of the gas turbine engine 162. Moreover, for this example embodiment, the gas turbine engine 162 is configured as a turbofan, and thus, the first propulsor 160 is configured as a hybrid electric turbofan.

Likewise, the second propulsor 170 includes a gas turbine engine 172 and an electric machine 174 operatively coupled with the gas turbine engine 172. The electric machine 174 can be an electric generator, an electric motor, or a combination generator/motor. For this example embodiment, the electric machine 174 is a combination generator/motor. In this manner, when operating as an electric generator, the electric machine 174 can generate electrical power when driven by the gas turbine engine 172. When operating as an electric motor, the electric machine 174 can drive or motor a fan spool of the gas turbine engine 172. Furthermore, for this example embodiment, the gas turbine engine 172 is configured as a turbofan, and thus, the second propulsor 170 is configured as a hybrid electric turbofan.

The hybrid-electric propulsion system 150 further includes an electric power source 180 electrically connectable to the electric machines 164, 174, and in some embodiments, other electrical loads. The electric power source 180 may be configured as an electric energy storage unit (e.g., one or more batteries, such as one or more lithium-ion batteries, or alternatively may be configured as any other suitable electrical energy storage devices, such as supercapacitors), as one or more fuel cells (e.g., one or more proton electron membrane fuel cells and/or solid oxide fuel cells), etc. Notably, when the electric power source 180 is one or more fuel cells, the hybrid-electric propulsion system 150 may further include a separate fuel storage tank 181 containing fuel (e.g., liquid and/or gaseous hydrogen, methane, etc.) for the one or more fuel cells.

The hybrid-electric propulsion system 150 also includes a power management system having a controller 182 and a power bus 184. The electric machines 164, 174, the electric energy storage unit 180, and the controller 182 are each electrically connectable to one another through one or more electric lines 186 of the power bus 184. For instance, the power bus 184 may include various switches or other power electronics movable to selectively electrically connect the various components of the hybrid-electric propulsion system 150. Additionally, the power bus 184 may further include power electronics, such as inverters, converters, rectifiers, etc., for conditioning or converting electrical power within the hybrid-electric propulsion system 150.

The controller 182 is configured to distribute electrical power between the various components of the hybrid-electric propulsion system 150. For example, the controller 182 may control the power electronics of the power bus 184 to provide electrical power to, or draw electrical power from, the various components, such as the electric machines 164, 174, to operate the hybrid-electric propulsion system 150 between various operating modes and perform various functions. Such is depicted schematically as the electric lines 186 of the power bus 184 extend through the controller 182.

Referring still to FIG. 1, as is shown schematically, it will be appreciated that the aircraft 100 further includes a fuel system having a fuel tank 190 located in each of the first wing 120 and second wing 122 and, although not depicted, a fuel delivery system fluidly connecting the fuel tanks 190 to the gas turbine engines 162, 172.

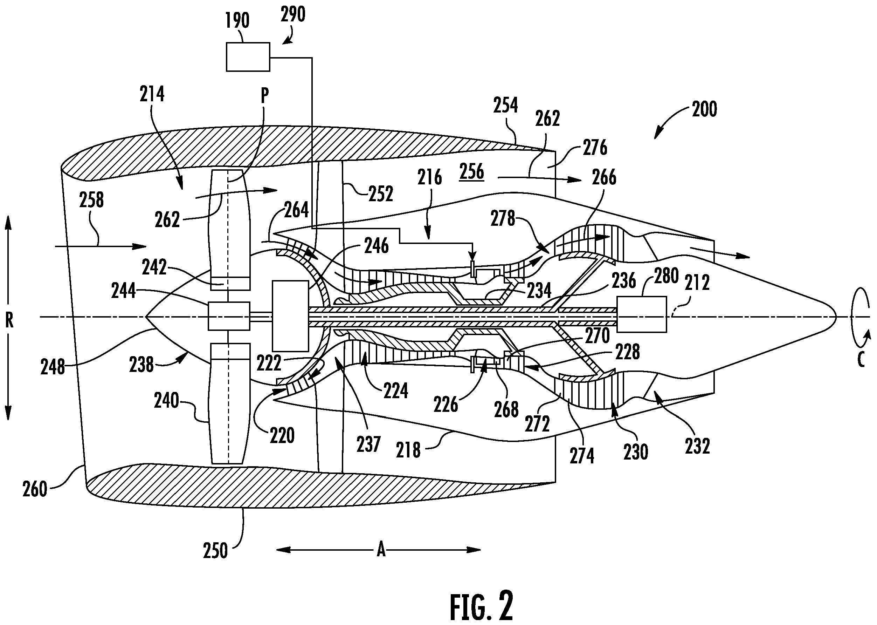

Referring now to FIG. 2, FIG. 2 is a schematic cross-sectional view of a propulsor in accordance with an exemplary embodiment of the present disclosure. In certain exemplary embodiments, the propulsor may be one of the first or second propulsors 160, 170 in FIG. 1.

For the embodiment of FIG. 2, the propulsor is configured as a hybrid electric, high-bypass turbofan jet engine, referred to herein simply as engine 200. As shown in FIG. 2, the engine 200 defines an axial direction A (extending parallel to a longitudinal centerline 212 provided for reference), a radial direction R, and a circumferential direction C extending about the longitudinal centerline 212. In general, the engine 200 includes a fan section 214 and a turbomachine 216 disposed downstream from the fan section 214.

The exemplary turbomachine 216 depicted generally includes a substantially tubular outer casing 218 that defines an annular inlet 220. The outer casing 218 encases, in serial flow relationship, a compressor section including a booster or low pressure (LP) compressor 222 and a high pressure (HP) compressor 224; a combustion section 226; a turbine section including a high pressure (HP) turbine 228 and a low pressure (LP) turbine 230; and a jet exhaust nozzle section 232. A high pressure (HP) shaft 234 (which may additionally or alternatively be a spool) drivingly connects the HP turbine 228 to the HP compressor 224. A low pressure (LP) shaft 236 (which may additionally or alternatively be a spool) drivingly connects the LP turbine 230 to the LP compressor 222. The compressor section, combustion section 226, turbine section, and jet exhaust nozzle section 232 together define a working gas flowpath 237.

For the embodiment depicted, the fan section 214 includes a fan 238 having a plurality of fan blades 240 coupled to a disk 242 in a spaced apart manner. As depicted, the fan blades 240 extend outwardly from disk 242 generally along the radial direction R. Each fan blade 240 is rotatable relative to the disk 242 about a pitch axis P by virtue of the fan blades 240 being operatively coupled to a suitable pitch change mechanism 244 configured to collectively vary the pitch of the fan blades 240, e.g., in unison. The engine 200 further includes a power gear box 246, and the fan blades 240, disk 242, and pitch change mechanism 244 are together rotatable about the longitudinal centerline 212 by LP shaft 236 across the power gear box 246. The power gear box 246 includes a plurality of gears for adjusting a rotational speed of the fan 238 relative to a rotational speed of the LP shaft 236, such that the fan 238 may rotate at a more efficient fan speed.

Referring still to the exemplary embodiment of FIG. 2, the disk 242 is covered by a rotatable front hub 248 of the fan section 214 (sometimes also referred to as a "spinner"). The front hub 248 is aerodynamically contoured to promote an airflow through the plurality of fan blades 240.

Additionally, the exemplary fan section 214 includes an annular fan casing or outer nacelle 250 that circumferentially surrounds the fan 238 and/or at least a portion of the turbomachine 216. It should be appreciated that the nacelle 250 is supported relative to the turbomachine 216 by a plurality of circumferentially-spaced outlet guide vanes 252 in the embodiment depicted. Moreover, a downstream section 254 of the nacelle 250 extends over an outer portion of the turbomachine 216 so as to define a bypass airflow passage 256 therebetween.

During operation of the engine 200, a volume of air 258 enters the engine 200 through an associated inlet 260 of the nacelle 250 and fan section 214. As the volume of air 258 passes across the fan blades 240, a first portion of air 262 is directed or routed into the bypass airflow passage 256 and a second portion of air 264 as indicated by arrow 264 is directed or routed into the working gas flowpath 237, or more specifically into the LP compressor 222. The ratio between the first portion of air 262 and the second portion of air 264 is commonly known as a bypass ratio. A pressure of the second portion of air 264 is then increased as it is routed through the HP compressor 224 and into the combustion section 226, where it is mixed with fuel and burned to provide combustion gases 266. A fuel delivery system 290 of a fuel system of an aircraft incorporating the engine 200 is depicted providing a flow of fuel to a combustor of the combustion section 226.

The combustion gases 266 are routed through the HP turbine 228 where a portion of thermal and/or kinetic energy from the combustion gases 266 is extracted via sequential stages of HP turbine stator vanes 268 that are coupled to the outer casing 218 and HP turbine rotor blades 270 that are coupled to the HP shaft 234, thus causing the HP shaft 234 to rotate, thereby supporting operation of the HP compressor 224. The combustion gases 266 are then routed through the LP turbine 230 where a second portion of thermal and kinetic energy is extracted from the combustion gases 266 via sequential stages of LP turbine stator vanes 272 that are coupled to the outer casing 218 and LP turbine rotor blades 274 that are coupled to the LP shaft 236, thus causing the LP shaft 236 to rotate, thereby supporting operation of the LP compressor 222 and/or rotation of the fan 238.

The combustion gases 266 are subsequently routed through the jet exhaust nozzle section 232 of the turbomachine 216 to provide propulsive thrust. Simultaneously, the pressure of the first portion of air 262 is substantially increased as the first portion of air 262 is routed through the bypass airflow passage 256 before it is exhausted from a fan nozzle exhaust section 276 of the engine 200, also providing propulsive thrust. The HP turbine 228, the LP turbine 230, and the jet exhaust nozzle section 232 at least partially define a hot gas path 278 for routing the combustion gases 266 through the turbomachine 216.

Also provided in FIG. 2 is a portion of an electric drive assembly, and more specifically an electric machine 280. The electric machine 280 is operatively coupled with the engine 200 for, e.g., adding power to the engine 200, extracting power from the engine 200, or both. The electric machine280 is depicted embedded within the engine 200 at a location inward of the working gas flowpath 237. However, in other exemplary embodiments, the electric drive assembly may additionally or alternatively include an electric machine in an under-cowl location (e.g., underneath the outer casing 218 and outward of the working gas flowpath 237), or at any other suitable location.

It should be appreciated, however, that the exemplary engine 200 depicted in FIG. 2 is by way of example only, and that in other exemplary embodiments, the engine 200 may have any other suitable configuration. For example, although the engine 200 depicted is configured as a ducted gas turbine engine (i.e., including the outer nacelle 250), in other embodiments, the engine 200 may be an unducted gas turbine engine (such that the fan 238 is an unducted fan, and the outlet guide vanes 252 are cantilevered from the outer casing 218). Additionally, or alternatively, although the engine 200 depicted is configured as a geared gas turbine engine (i.e., including the power gear box 246) and a variable pitch gas turbine engine (i.e., including a fan 238 configured as a variable pitch fan), in other embodiments, the engine 200 may additionally or alternatively be configured as a direct drive gas turbine engine (such that the LP shaft 236 rotates at the same speed as the fan 238), as a fixed pitch gas turbine engine (such that the fan 238 includes fan blades 240 that are not rotatable about a pitch axis P), or both. It should also be appreciated, that in still other exemplary embodiments, aspects of the present disclosure may be incorporated into any other suitable gas turbine engine. For example, in other exemplary embodiments, aspects of the present disclosure may (as appropriate) be incorporated into, e.g., a turboprop gas turbine engine, a turboshaft gas turbine engine, or a turbojet gas turbine engine.

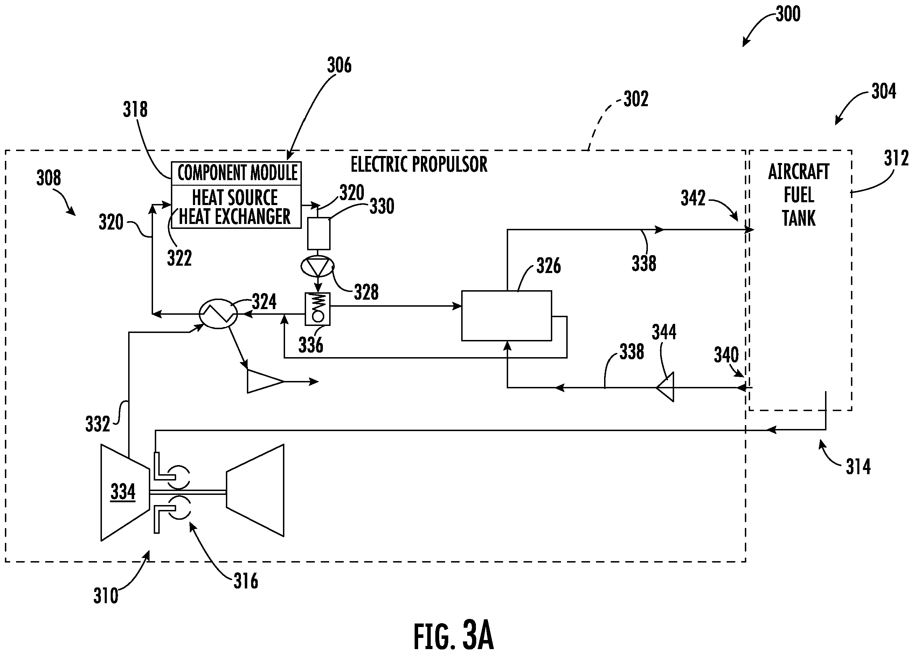

Referring now to FIG. 3A, an aircraft system 300 in accordance with an exemplary aspect of the present disclosure is provided. This system generally includes a hybrid electric propulsor 302, a fuel system 304, an electric drive assembly 306, and a thermal management system 308.

The hybrid electric propulsor 302 includes a gas turbine engine 310 in the embodiment depicted. In at least certain exemplary embodiments, the gas turbine engine 310 shown in FIG. 3A may be configured similarly to the exemplary engine 200 of FIG. 2, one or more of the gas turbine engines 162, 172 of FIG. 1, or in any other suitable manner.

The fuel system 304 includes a fuel tank 312 and a fuel delivery system 314. More specifically, the fuel tank 312 refers to an aircraft fuel tank in the embodiment illustrated. For example, in at least certain exemplary embodiments, the fuel tank 312 may be configured similarly to the exemplary fuel tank referenced in FIG. 1. The fuel delivery system 314 fluidly connects the fuel tank 312 to the gas turbine engine 310, and more specifically, it fluidly connects the fuel tank 312 to a combustor 316 within a combustion section of the gas turbine engine 310.

The electric drive assembly 306 includes a component module 318, which can be any portion of an electrical section of the electric drive assembly 306. As will be appreciated, the term "electric drive assembly" refers to an assembly configured to assist the aircraft with generating thrust for the aircraft. For instance, in certain exemplary embodiments, the component module 318 may be a battery (see, e.g., the electric energy storage unit 180 of FIG. 1), a fuel cell (e.g., a proton electron membrane fuel cell or solid oxide fuel cell integrated with the gas turbine engine 310 configured to generate electrical power), an electric machine (see, e.g., the electric machine of FIG. 2), power electronics associated with one or more of the above components, or a combination thereof. Although only a single component module 318 is depicted in FIG. 3A, other embodiments may include multiple component modules 318 arranged in series or in parallel forming the electric drive assembly 306.

The thermal management system 308 generally includes a thermal fluid loop 320, a heat source heat exchanger 322, an airflow heat sink heat exchanger 324, and a fuel heat sink heat exchanger 326. Notably, to facilitate the desired flow through the thermal fluid loop 320 in the illustrated embodiment, the thermal management system 308 includes a thermal management system (TMS) pump 328 in fluid communication with the thermal fluid loop 320 for providing a flow of the thermal fluid through the thermal fluid loop 320, and an expansion tank 330 to assist with facilitating variations in fluid volumes and temperatures during operating conditions of the aircraft system 300.

The heat source heat exchanger 322 is in thermal communication with both the component module 318 of the electric drive assembly 306 and the thermal fluid loop 320. The heat source heat exchanger 322 is designed to transfer heat from the component module 318 to the thermal fluid via the thermal fluid loop 320. In doing so, the heat source heat exchanger 322 effectively cools the component module 318 of the electric drive assembly 306.

The airflow heat sink heat exchanger 324 is in thermal communication with the thermal fluid loop 320 and is designed to be in thermal communication with a cooling airflow 332 during the operation of the gas turbine engine 310. In the embodiment shown, the airflow heat sink heat exchanger 324 is intended to receive one or more of the airflows through the gas turbine engine 310, such as an airflow through a working gas flowpath of the gas turbine engine 310 (see, e.g., working gas flowpath 237 in FIG. 2) or an airflow through a bypass passage of the gas turbine engine 310 (see, e.g., bypass passage 256 of FIG. 2). More precisely, for the embodiment depicted, the airflow heat sink heat exchanger 324 is configured to receive a bleed airflow from a compressor 334 of the gas turbine engine 310. The airflow from the airflow heat sink heat exchanger 324 can be exhausted to any suitable location (e.g., ambient). Accordingly, it will be appreciated that the airflow heat sink heat exchanger 324 is designed to transfer heat from the thermal fluid through the thermal fluid loop 320 to the cooling airflow 332.

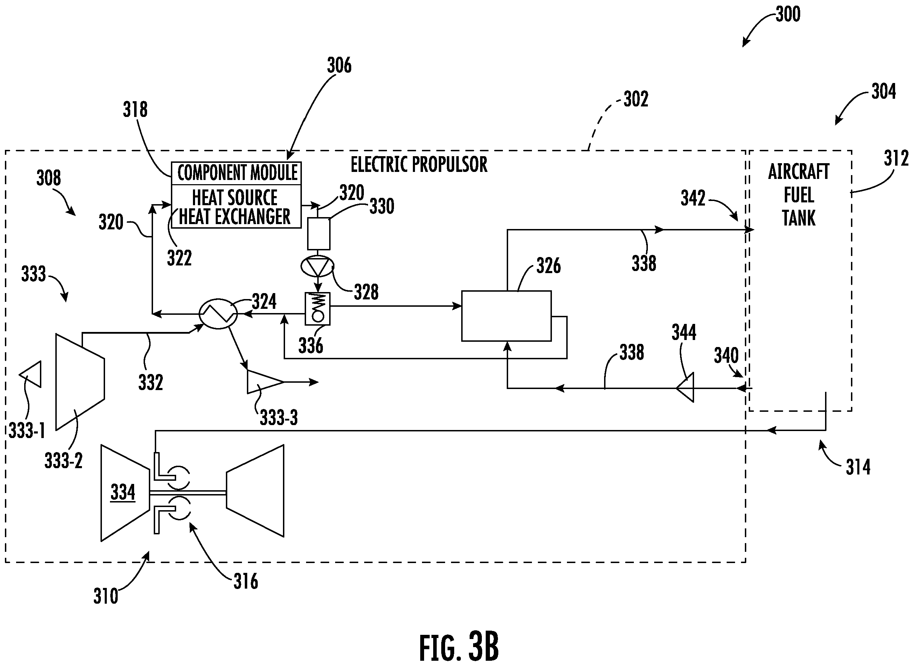

Referring briefly to FIG. 3B, providing an aircraft system 300 in accordance with another exemplary aspect of the present disclosure, it will be appreciated that in other exemplary embodiments, a cooling airflow 332 may not be provided form a gas turbine engine 310, and instead may be received from a dedicated airflow supply system 333 having a dedicated air intake 333-1, a dedicated air pressurization system 333-2 (e.g., a fan, an ejector, or a combination thereof), and a dedicated hot air exhaust 333-3.

Referring now back to FIG. 3A, it should be understood that during certain operations of the aircraft including the aircraft system 300, the airflow heat sink heat exchanger 324 may provide sufficient heat rejection for the thermal fluid and thermal management system 308 to maintain a temperature of the component module 318 within a desired range. For instance, under operating conditions where sufficient airflow is available to the airflow heat sink heat exchanger 324, and the amount of heat generated by the component module 318 is relatively low, the thermal management system 308 may maintain the temperature of the component module 318 within the desired temperature range using the airflow heat sink heat exchanger 324 as the sole heat sink for the thermal management system 308.

However, under certain operating conditions, such as a first operating condition, the airflow available to the airflow heat sink heat exchanger 324 may be insufficient for the amount of heat generated by the component module 318, making a supplemental or auxiliary heat exchanger desirable for the thermal fluid within the thermal fluid loop 320.

Accordingly, the thermal management system 308 includes the fuel heat sink heat exchanger 326 in selective thermal communication with the thermal fluid loop 320, in selective thermal communication with the fuel tank 312, or both. For instance, in the illustrated embodiment, the thermal management system 308 includes an active control switch valve 336 that selectively fluidly connects the fuel heat sink heat exchanger 326 to the thermal fluid loop 320. Also, the fuel system 304 includes an auxiliary loop 338 extending between an inlet 340 and an outlet 342. Each of the inlet 340 and the outlet 342 is in fluid communication with the fuel tank 312 during at least a first operating condition for providing a fuel flow through the auxiliary loop 338. The auxiliary loop 338 is in fluid communication with the fuel heat sink heat exchanger 326 for providing fuel to the fuel heat sink heat exchanger 326 during at least the first operating condition. Notably, in the shown embodiment, the auxiliary loop 338 is fluidly coupled to the fuel tank 312 and fluidly coupled to the fuel heat sink heat exchanger 326. Additionally, the fuel system 304 includes an auxiliary fuel pump 344 in fluid communication with the auxiliary loop 338 for providing a flow of fuel through the auxiliary loop 338 during at least the first operating condition.

Referring still to FIG. 3A, it will be appreciated that during the first operating condition, the fuel heat sink heat exchanger 326 is in fluid communication with the thermal fluid loop 320, receiving at least a portion of the flow of thermal fluid through the thermal fluid loop 320 (e.g., at least 25%, such as at least 50%, such as at least 75%, such as up to 100%), and is further in fluid communication with the fuel tank 312 via the auxiliary loop 338, receiving a flow of fuel from the auxiliary loop 338. Notably, the fuel heat sink heat exchanger 326 is in fluid communication with the fuel tank 312 independently of the fuel delivery system 314 during at least the first operating condition, and more specifically during all operating conditions for the embodiment depicted. In this way, the capacity of the fuel heat sink heat exchanger 326 to reject heat from the thermal fluid to the fuel is not dictated by an amount of fuel being provided from the fuel tank 312 to, for example, the gas turbine engine 310 through the fuel delivery system 314.

The first operating condition may be any operating condition in which a mass flowrate of the cooling airflow 332 provided to the airflow heat sink heat exchanger 324 isn't high enough to reject a sufficient amount of heat to maintain the component module 318 within the desired operating temperature range. For instance, in certain exemplary embodiments, the first operating condition may be a takeoff operating condition. During the takeoff operating condition, the component module 318 may be operating in a manner that generates a relatively high amount of heat. For instance, in embodiments where the component module 318 is a battery, the battery may be transferring a large amount of power to an electric motor. In embodiments where the component module 318 is an electric machine, the electric machine may be operating to drive one or more shafts of the gas turbine engine 310, and so on. Also, during the takeoff operating condition, the aircraft may not be traveling at very high speeds, such that the mass flowrate of the cooling airflow 332 provided to the airflow heat sink heat exchanger 324 may be relatively low. Therefore, operating the thermal management system 308 to provide at least a portion of the thermal fluid through the thermal fluid loop 320 to the fuel heat sink heat exchanger 326 to transfer heat from the thermal fluid to a fuel flow from the fuel tank 312 may allow for a necessary amount of heat rejection to maintain the component module 318 within the desired operating temperature range.

It will be appreciated, however, that during other operating conditions, it may not be necessary to supplement the heat rejection as described above with respect to the first operating condition. For example, during at least a second operating condition, the fuel heat sink heat exchanger 326 is thermally disconnected from the thermal fluid loop 320, the fuel tank 312, or both. More specifically, in the depicted embodiment, during at least the second operating condition, the fuel heat sink heat exchanger 326 is thermally disconnected from the thermal fluid loop 320 using the active control switch valve 336 (e.g., the fuel heat sink heat exchanger 326 receives less than 10% of a thermal fluid through the thermal fluid loop 320, such as less than 5%, such as less than 1%). As stated earlier, the fuel heat sink heat exchanger 326 is fluidly connected to the fuel tank 312 through the auxiliary loop 338, which in the shown embodiment, is fluidly coupled to the fuel tank 312. Notably, however, the auxiliary fuel pump 344 may not operate during the second operating condition.

In certain exemplary embodiments, the second operating condition may be a cruise operating condition. During the cruise operating condition, a relatively high mass flowrate of cooling airflow 332 may be provided to the airflow heat sink heat exchanger 324, such that a sufficient amount of heat may be rejected from the thermal fluid by the airflow heat sink heat exchanger 324 to maintain the component module 318 within the desired operating temperature range.

It should be appreciated, however, that the exemplary embodiment of FIG. 3A is provided as an example only.

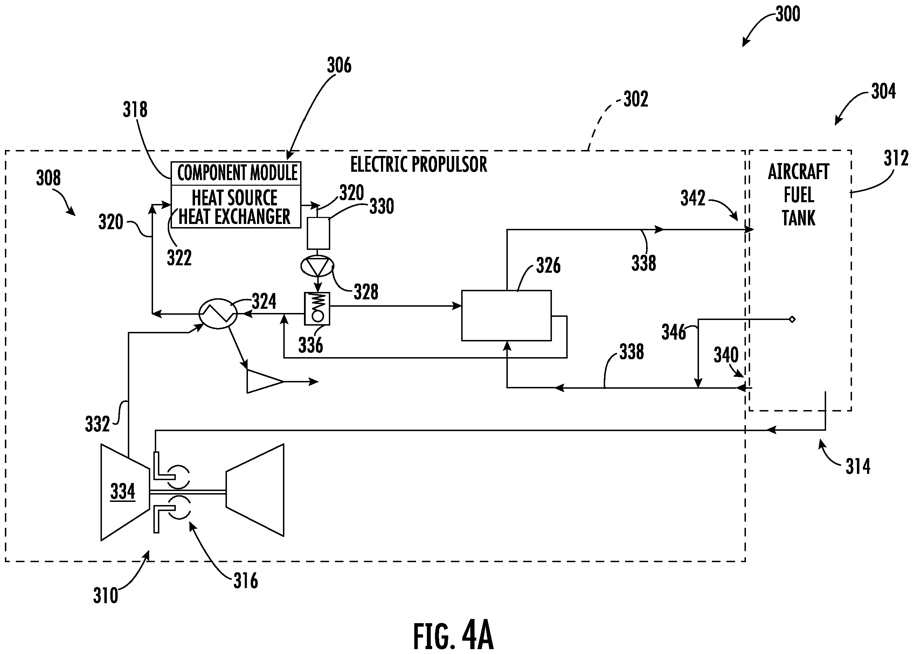

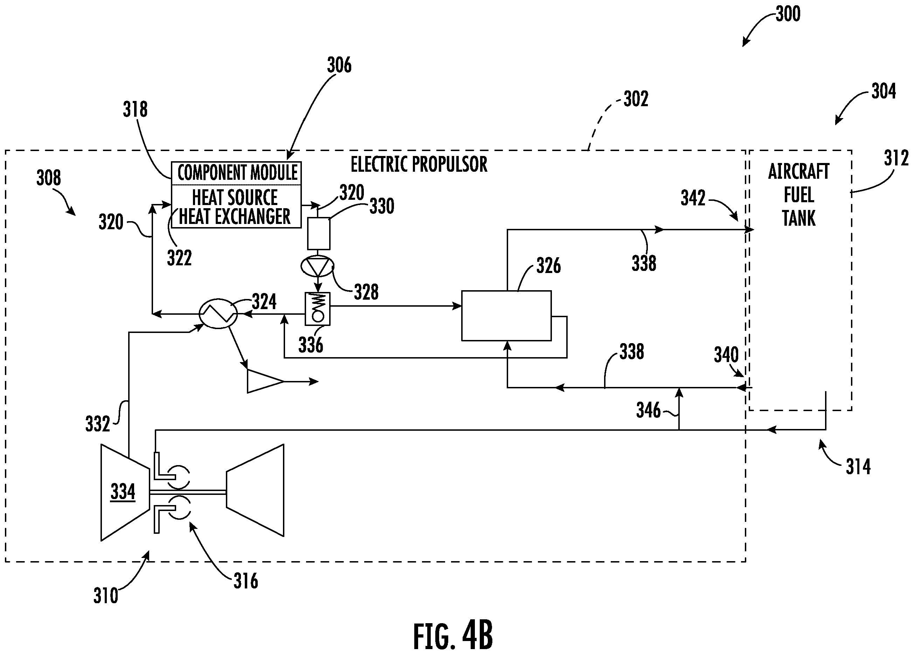

For instance, referring now to FIGS. 4A and 4B, a schematic view of an aircraft system 300 in accordance with another exemplary embodiment of the present disclosure is provided. The embodiments of FIG. 4A and 4B may each be configured substantially similarly to the embodiment described above with reference to, e.g., FIG. 3A. However, for the embodiments of FIGS. 4A and 4B, the fuel system 304 does not include an auxiliary fuel pump (see auxiliary fuel pump 344 of FIG. 3A). Instead, the thermal management system 308 includes a motive flow line 346 (FIG. 4A), 346' (FIG. 4B).

In particular, with reference to FIG. 4A, the motive flow line 346 depicted extends from a fuel tank 312 of the fuel system 304 to an auxiliary loop 338 of the fuel system 304 to induce a fuel flow through the auxiliary loop 338 during at least a first operating condition. The motive flow line 346 may include a venturi pump or other similar device to induce fuel flow through the auxiliary loop 338. In this way, the motive flow line 346 may be designed to provide pressurized fuel flow to the auxiliary loop 338 when a fuel flow through the auxiliary loop 338 is desired.

Further, with reference to FIG. 4B, the motive flow line 346 depicted extends from a fuel delivery system 314 to the auxiliary loop 338 to urge a fuel flow through the auxiliary loop 338 during at least a first operating condition. As will be appreciated, with such a configuration, the fuel flow from the fuel delivery system 314 may travel to and through the auxiliary loop 338 and then be returned to a fuel tank 312.

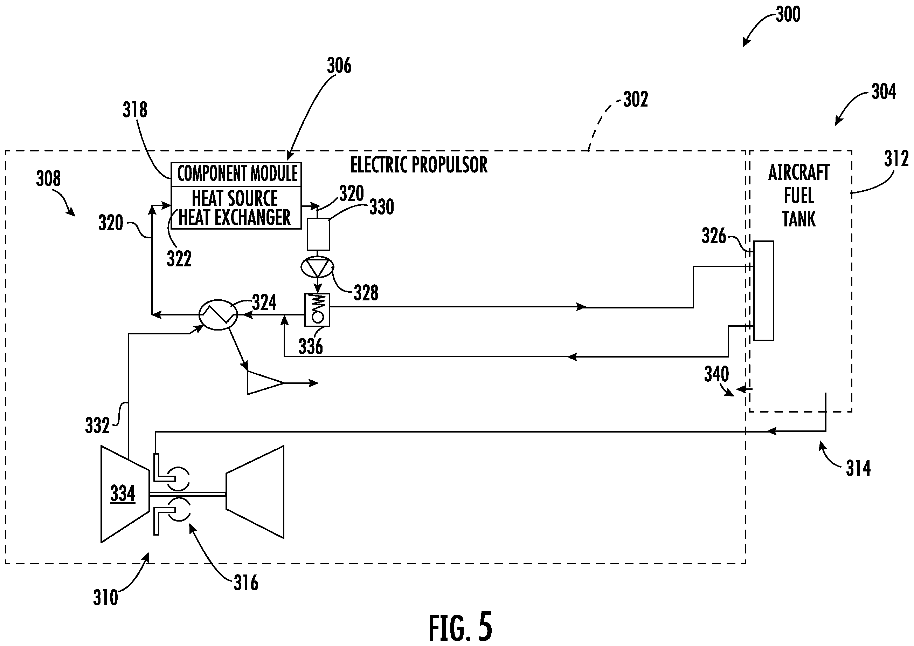

Additionally, referring now to FIG. 5, a schematic view of an aircraft system 300 in accordance with yet another exemplary embodiment of the present disclosure is provided. The embodiment of FIG. 5 may be configured substantially similarly to the one described above with reference to FIG. 3A. However, for the embodiment of FIG. 5, the thermal management system 308 does not include an auxiliary loop 338. Instead, in the embodiment of FIG. 5, a fuel heat sink heat exchanger 326 of a thermal management system 308 of the aircraft system 300 is positioned in direct fluid communication with a fuel tank 312 of a fuel system 304 of the aircraft system 300. For instance, in certain exemplary embodiments, the fuel heat sink heat exchanger 326 may be formed integrally with the fuel tank 312, or may be formed separately from the fuel tank 312 and coupled to the fuel tank 312.

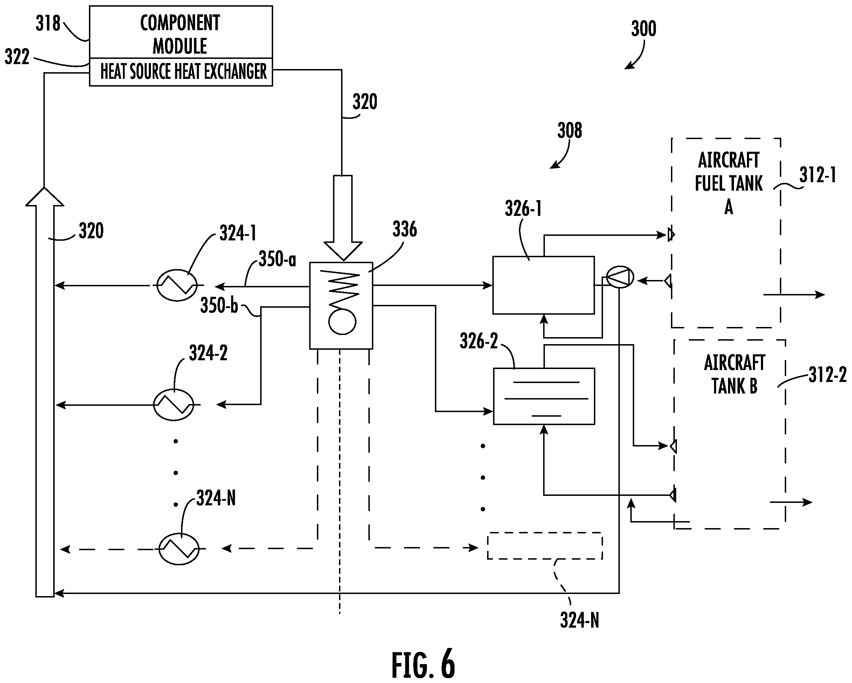

In addition, referring now to FIG. 6, a schematic view of an aircraft system 300 in accordance with yet another exemplary embodiment of the present disclosure is provided. The embodiment of FIG. 6 may also be configured substantially similarly to the embodiment described earlier with reference to FIG. 3A.

For example, the exemplary aircraft system 300 includes a thermal management system 308 having a thermal fluid loop 320, a heat source heat exchanger 322 in thermal communication with a component module 318 and the thermal fluid loop 320, an airflow heat sink heat exchanger 324 in thermal communication with the thermal fluid loop 320 (and configured to be in thermal communication with a cooling airflow 332 during operation of the gas turbine engine 310), and a fuel heat sink heat exchanger 326 in selective thermal communication with the thermal fluid loop 320, the fuel tank 312, or both.

However, in the depicted embodiment, the airflow heat sink heat exchanger 324 is a first airflow heat sink heat exchanger 324-1, and the thermal management system 308 further includes a second airflow heat sink heat exchanger 324-2, up to an Nth airflow heat sink heat exchanger 324-N. The thermal fluid loop 320 further includes a respective first branch 350-1, second branch 350-2, and up to an Nth branch 350-N, each for the respective airflow heat sink heat exchangers 324-1, 324-2, 324-N. Such a configuration may allow for the desired amount of heat rejection to one or more cooling airflows 332 of the gas turbine engine 310 (see, e.g., FIG. 3A).

Similarly, the fuel heat sink heat exchanger 326 is a first fuel heat sink heat exchanger 326-1, and the fuel tank 312 is a first fuel tank 312-1 of the aircraft system 300. The thermal management system 308 further includes a second fuel heat sink heat exchanger 326-2, and up to an Nth fuel heat sink heat exchanger 326-N. The aircraft system 300 also includes a second fuel tank 312-2, and up to an Nth fuel tank 312-N. In certain exemplary embodiments, the first fuel tank 312-1 may be a liquid fuel tank (including, for example, jet fuel, such as Jet A) and the second fuel tank 312-2 may be a cryogenic fuel tank (including, for example, cryogenic hydrogen fuel).

The second fuel heat sink heat exchanger 326-2 is in selective thermal communication with the thermal fluid loop 320, the second fuel tank 312-2, or both. In particular, in the depicted embodiment the thermal management system 308 includes an active control switch valve 336 selectively fluidly connecting the first fuel heat sink heat exchanger 326-1 to the thermal fluid loop 320, selectively fluidly connecting the second fuel heat sink heat exchanger 326-2 to the thermal fluid loop 320, and selectively thermally connecting the Nth fuel heat sink heat exchanger 326-N to the thermal fluid loop 320.

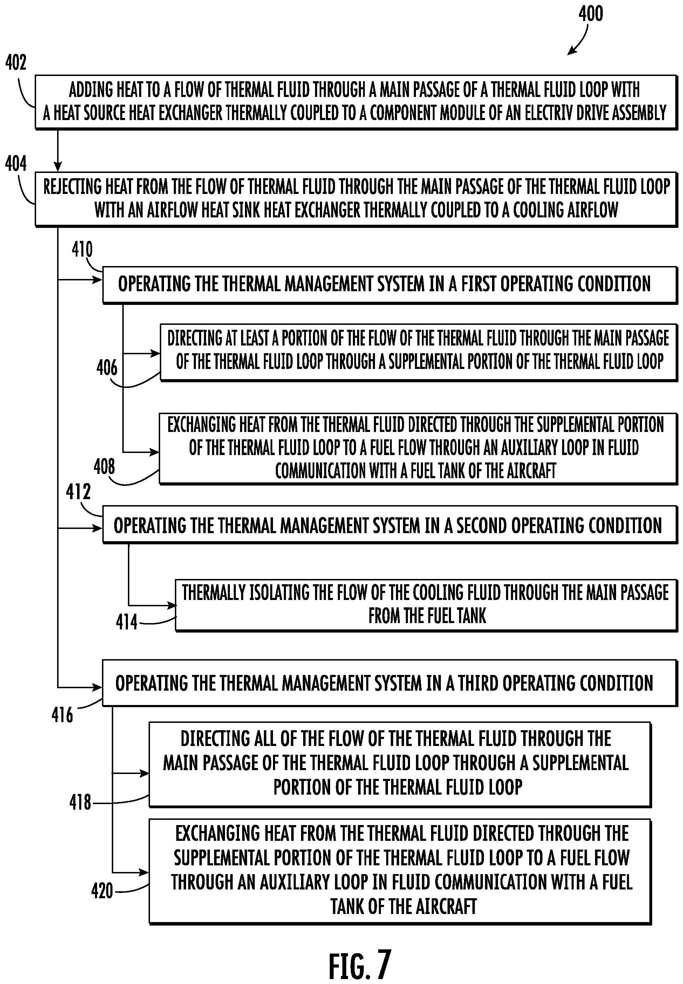

Referring now to FIG. 7, a method 400 of operating a thermal management system for an aircraft in accordance with an exemplary aspect of the present disclosure is provided. The method 400 may be used to operate one or more of the thermal management systems of the aircraft systems described above with reference to FIGS. 3A through 6.

The method 400 includes at (402) adding heat to a flow of thermal fluid through a main passage of a thermal fluid loop with a heat source heat exchanger thermally coupled to a component module of an electric drive assembly.

The method 400 further includes at (404) rejecting heat from the flow of thermal fluid through the main passage of the thermal fluid loop with an airflow heat sink heat exchanger thermally coupled to a cooling airflow.

Referring still to FIG. 7, the exemplary method 400 depicted further includes at (406) directing at least a portion of the flow of the thermal fluid through the main passage of the thermal fluid loop through a supplemental portion of the thermal fluid loop, and at (408) exchanging heat from the thermal fluid directed through the supplemental portion of the thermal fluid loop to a fuel flow through an auxiliary loop in fluid communication with a fuel tank of the aircraft. The auxiliary loop is separate from a fuel delivery system fluidly coupled to the fuel tank. In such a manner, any fuel through the supplemental portion returns to a main cavity of the tank prior to being provided through the fuel delivery system, and any fuel provided to the supplemental portion does not travel through the fuel delivery system between the main cavity and the supplemental portion.

More specifically, in at least the exemplary aspect depicted, the method 400 further includes at (410) operating the thermal management system in a first operating condition. Operating the thermal management system in the first operating condition at (410) includes the steps of: directing at (406) at least the portion of the flow of the cooling fluid through the main passage through the supplemental portion with the active control switch valve, and exchanging at (408) heat from the thermal fluid directed through the supplemental portion of the thermal fluid loop to the fuel flow through the auxiliary loop.

The method 400 of FIG. 7 further includes at (412) operating the thermal management system in a second operating condition. Operating the thermal management system in the second operating condition at (412) includes at (414) thermally isolating the flow of the cooling fluid through the main passage from the fuel tank.

Referring still to FIG. 7, the method 400 further includes at (416) operating the thermal management system in a third operating condition. Operating the thermal management system in the third operating condition at (416) includes at (418) directing all of the flow of the thermal fluid through the main passage of the thermal fluid loop through a supplemental portion of the thermal fluid loop, and at (420) exchanging heat from the thermal fluid directed through the supplemental portion of the thermal fluid loop to a fuel flow through an auxiliary loop in fluid communication with a fuel tank of the aircraft. As is noted above, the auxiliary loop is separate from a fuel delivery system fluidly coupled to the fuel tank. In such a manner, any fuel through the supplemental portion returns to a main cavity of the tank prior to being provided through the fuel delivery system, and any fuel provided to the supplemental portion does not travel through the fuel delivery system between the main cavity and the supplemental portion.

It will be appreciated that operating the thermal management system in the third operating condition at (416) may include operating the thermal management system during a ground operating condition (e.g., when a cooling airflow is insufficient to provide meaningful cooling), during a failure condition of an airflow cooling system, or both.

It will be appreciated that the exemplary system(s) and method(s) described above may be incorporated into an aircraft and/or propulsion system utilizing any suitable gas turbine engine and electric drive assembly. For example, although the systems described above are described as being incorporated into a propulsion system having a ducted turbofan engine (see, e.g., FIG. 2), in other exemplary embodiments, one or more system(s) or method(s) of the present disclosure may be incorporated into an aircraft and/or propulsion system utilizing any other suitable gas turbine engine and electric drive assembly. For example, in other exemplary embodiments, one or more system(s) or method(s) of the present disclosure may be incorporated into an aircraft and/or propulsion system utilizing a turboprop engine.

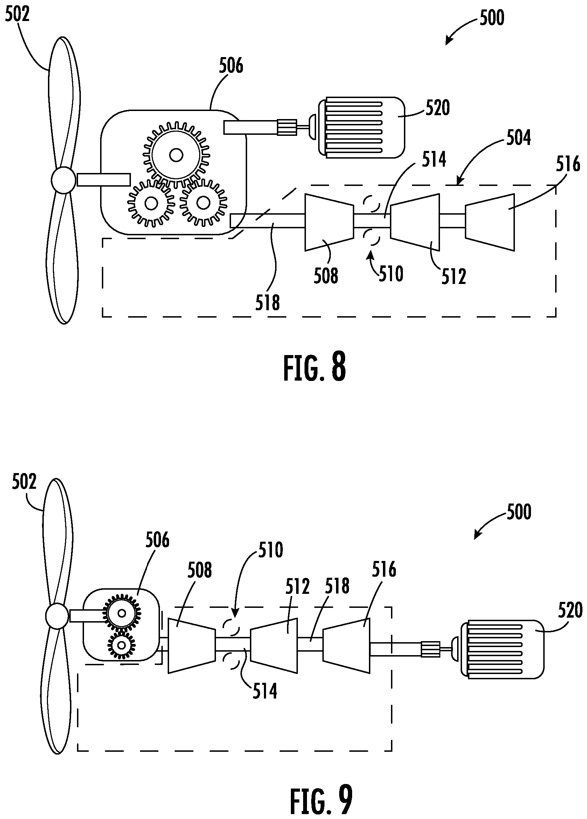

Referring now to FIGS. 8 and 9, two gas turbine engines in accordance with an exemplary embodiment of the present disclosure are provided, as may be utilized with one or more system(s) or method(s) of the present disclosure. Each of the gas turbine engines of FIGS. 8 and 9 are configured as turboprop engines 500. The turboprop engines 500 each include a propeller 502, a turbomachine 504, and, for the embodiment depicted, a gearbox 506. The turbomachine 504 includes a compressor 508, a combustor 510, and a high pressure turbine 512. The compressor 508 and high pressure turbine 512 are connected by a high pressure shaft 514.

The turbomachine 504 of each of the turboprop engines 500 further includes a power turbine 516 coupled to a drive shaft 518 rotatably coupled to the propeller 502 across the gearbox 506.

The turboprop engines 500 are each further operable with an electric drive assembly having an electric machine 520 operable to add power to the turboprop engines 500, extract power from the turboprop engines 500, or both.

Referring particularly to FIG. 8, the electric machine 520 is rotatably coupled to the turboprop engine 500 through the gearbox 506. Referring particularly to FIG. 9, the electric machine 520 is rotatably coupled to the drive shaft 518.

In one or both of the embodiments of FIG. 8 and FIG. 9, it will be appreciated that inclusion of a thermal management system, such as one or more of the exemplary thermal management systems described above with reference to FIGS. 3A through 6, may allow for inclusion of an electric machine 520 having a desired amount of power to enable a desired efficient operation by ensuring the electric machine 520 may remain within desired operating temperature ranges during a variety of operating conditions (e.g., takeoff, cruise, ground idle, etc.).

Further aspects are provided by the subject matter of the following clauses:

An aircraft system comprising: a gas turbine engine; a fuel system having a fuel tank and a fuel delivery system fluidly connecting the fuel tank to the gas turbine engine; an electric drive assembly comprising a component module; and a thermal management system comprising: a thermal fluid loop; a heat source heat exchanger in thermal communication with the component module and the thermal fluid loop; an airflow heat sink heat exchanger in thermal communication with the thermal fluid loop and further configured to be in thermal communication with a cooling airflow during operation of the gas turbine engine; and a fuel heat sink heat exchanger in selective thermal communication with the thermal fluid loop, the fuel tank, or both, the fuel heat sink heat exchanger in fluid communication with the fuel tank independently of the fuel delivery system during at least a first operating condition.

The aircraft system of any preceding clause, wherein the thermal management system comprises an active control switch valve selectively fluidly connecting the fuel heat sink heat exchanger to the thermal fluid loop.

The aircraft system of any preceding clause, wherein the fuel system further comprises an auxiliary loop extending between an inlet and an outlet, wherein the inlet and the outlet are each in fluid communication with the fuel tank during at least the first operating condition.

The aircraft system of any preceding clause, wherein the fuel system further comprises an auxiliary fuel pump in fluid communication with the auxiliary loop for providing a flow of fuel through the auxiliary loop during at least the first operating condition.

The aircraft system of any preceding clause, wherein the thermal management system further comprises a motive flow line extending from the fuel tank to the auxiliary loop to urge a fuel flow through the auxiliary loop during at least the first operating condition.

The aircraft system of any preceding clause, wherein the component module comprises a battery, a fuel cell, an electric machine, power electronics, or a combination thereof.

The aircraft system of any preceding clause, wherein the thermal management system comprises a TMS pump in fluid communication with the thermal fluid loop for providing a flow of thermal fluid through the thermal fluid loop.

The aircraft system of any preceding clause, wherein the fuel tank is a liquid fuel tank.

The aircraft system of any preceding clause, wherein the fuel tank is a cryogenic fuel tank.

The aircraft system of any preceding clause, wherein the first operating condition is a takeoff operating condition.

The aircraft system of any preceding clause, wherein the fuel heat sink heat exchanger is thermally disconnected from the thermal fluid loop, the fuel tank, or both during at least a second operating condition.

The aircraft system of any preceding clause, wherein the second operating condition is a cruise operating condition.

The aircraft system of any preceding clause, wherein the fuel tank is a first fuel tank, wherein the fuel heat sink heat exchanger is a first fuel heat sink heat exchanger, wherein the fuel system further comprises a second fuel tank, and wherein thermal management system further comprises a second fuel heat sink heat exchanger in selective thermal communication with the thermal fluid loop, the second fuel tank, or both.

The aircraft system of any preceding clause, wherein the thermal management system comprises an active control switch valve selectively fluidly connecting the first fuel heat sink heat exchanger to the thermal fluid loop and selectively fluidly connecting the second fuel heat sink heat exchanger to the thermal fluid loop.

The aircraft system of any preceding clause, wherein the fuel heat sink heat exchanger is integrated into the fuel tank.

The aircraft system of any preceding clause, wherein the gas turbine engine is a turboprop engine and wherein the component module of the electric drive assembly is an electric machine rotatable with the turboprop engine.

The aircraft system of any preceding clause, wherein the thermal management system further comprises a motive flow line extending from the fuel tank or from the fuel delivery system to the auxiliary loop to urge a fuel flow through the auxiliary loop during at least the first operating condition

A method of operating a thermal management system for an aircraft, the method comprising: adding heat to a flow of thermal fluid through a main passage of a thermal fluid loop through with a heat source heat exchanger thermally coupled to a component module of an electric drive assembly; rejecting heat from the flow of thermal fluid through the main passage of the thermal fluid loop with an airflow heat sink heat exchanger in thermally coupled to a cooling airflow; directing at least a portion of the flow of the thermal fluid through the main passage of the thermal fluid loop through a supplemental portion of the thermal fluid loop; and exchanging heat from the thermal fluid directed through the supplemental portion of the thermal fluid loop to a fuel flow through an auxiliary loop in fluid communication with a fuel tank of the aircraft, wherein the auxiliary loop is separate from a fuel delivery system fluidly coupled to the fuel tank.

The method of any preceding clause, further comprising: operating the thermal management system in a first operating condition, and wherein operating the thermal management system in the first operating condition comprises the steps of: directing at least the portion of the flow of the cooling fluid through the main passage through the supplemental portion with the active control switch valve, and exchanging heat from the thermal fluid directed through the supplemental portion of the thermal fluid loop to the fuel flow through the auxiliary loop.

The method of any preceding clause, wherein the first operating condition is a takeoff operating condition.

The method of any preceding clause, further comprising: operating the thermal management system in a second operating condition, and wherein operating the thermal management system in the second operating condition comprises thermally isolating the flow of the cooling fluid through the main passage from the fuel tank.

The method of any preceding clause, further comprising: operating the thermal management system in a third operating condition, and wherein operating the thermal management system in the third operating condition comprises directing all of the flow of the thermal fluid through the main passage of the thermal fluid loop through the supplemental portion of the thermal fluid loop; and exchanging heat from the thermal fluid directed through the supplemental portion of the thermal fluid loop to the fuel flow through the auxiliary loop in fluid communication with a fuel tank of the aircraft.

The method of any preceding clause, wherein the third operating condition is a ground operating condition, a failure condition of an airflow cooling system, or both.

The method of any preceding clause, wherein the component module comprises a battery, a fuel cell, an electric machine, power electronics, or a combination thereof.

An aircraft system comprising: a gas turbine engine; a fuel system having a fuel tank, a fuel delivery system fluidly connecting the fuel tank to the gas turbine engine, and an auxiliary loop extending between an inlet and an outlet, the inlet and the outlet each in fluid communication with the fuel tank; an electric drive assembly comprising a component module; and a thermal management system comprising: a thermal fluid loop; a heat source heat exchanger in thermal communication with the component module and the thermal fluid loop; an airflow heat sink heat exchanger in thermal communication with the thermal fluid loop and further configured to be in thermal communication with a cooling airflow during operation of the gas turbine engine; and a fuel heat sink heat exchanger in thermal communication with the thermal fluid loop and the auxiliary loop of the fuel system during at least a first operating condition.

The aircraft of any preceding clause, wherein the thermal management system further comprises a motive flow line extending from the fuel delivery system to the auxiliary loop to urge a fuel flow through the auxiliary loop during at least the first operating condition.

The aircraft of any preceding clause, wherein the thermal management system further comprises a motive flow line extending from the fuel tank or from the fuel delivery system to the auxiliary loop to urge a fuel flow through the auxiliary loop during at least the first operating condition.

This written description uses examples to disclose the present disclosure, including the best mode, and also to enable any person skilled in the art to practice the disclosure, including making and using any devices or systems and performing any incorporated methods. The patentable scope of the disclosure is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

## Claims

1. An aircraft system (300) comprising:
a gas turbine engine (310);
a fuel system (304) having a fuel tank (312) and a fuel delivery system (314) fluidly connecting the fuel tank (312) to the gas turbine engine (310);
an electric drive assembly (306) comprising a component module (318); and
a thermal management system (308) comprising:
a thermal fluid loop (320);
a heat source heat exchanger (322) in thermal communication with the component module (318) and the thermal fluid loop (320);
an airflow heat sink heat exchanger (324) in thermal communication with the thermal fluid loop (320) and further configured to be in thermal communication with a cooling airflow (332) during operation of the gas turbine engine (310); and
a fuel heat sink heat exchanger (326) in selective thermal communication with the thermal fluid loop (320), the fuel tank (312), or both, the fuel heat sink heat exchanger (326) in fluid communication with the fuel tank (312) independently of the fuel delivery system (314) during at least a first operating condition.

2. The aircraft system (300) of claim 1, wherein the thermal management system (308) comprises an active control switch valve (336) selectively fluidly connecting the fuel heat sink heat exchanger (326) to the thermal fluid loop (320).

3. The aircraft system (300) of claim 1 or 2, wherein the fuel system (304) further comprises an auxiliary loop (338) extending between an inlet (340) and an outlet (342), wherein the inlet (340) and the outlet (342) are each in fluid communication with the fuel tank (312) during at least the first operating condition.

4. The aircraft system (300) of claim 3, wherein the fuel system (304) further comprises an auxiliary fuel pump (344) in fluid communication with the auxiliary loop (338) for providing a flow of fuel through the auxiliary loop (338) during at least the first operating condition.

5. The aircraft system (300) of claim 3 or 4, wherein the thermal management system (308) further comprises a motive flow line (346) extending from the fuel tank (312) to the auxiliary loop (338) to urge a fuel flow through the auxiliary loop (338) during at least the first operating condition.

6. The aircraft system (300) of any preceding claim, wherein the component module (318) comprises a battery, a fuel cell, an electric machine (164, 174, 520), power electronics, or a combination thereof.

7. The aircraft system (300) of any preceding claim, wherein the thermal management system (308) comprises a thermal management system (TMS) pump (328) in fluid communication with the thermal fluid loop (320) for providing a flow of thermal fluid through the thermal fluid loop (320).

8. The aircraft system (300) of any preceding claim, wherein the fuel tank (312) is a liquid fuel tank (312).

9. The aircraft system (300) of any preceding claim, wherein the first operating condition is a takeoff operating condition.

10. The aircraft system (300) of any preceding claim, wherein the fuel heat sink heat exchanger (326) is thermally disconnected from the thermal fluid loop (320), the fuel tank (312), or both during at least a second operating condition.

11. The aircraft system (300) of claim 10, wherein the second operating condition is a cruise operating condition.

12. The aircraft system (300) of any preceding claim, wherein the fuel tank (312) is a first fuel tank (312), wherein the fuel heat sink heat exchanger (326) is a first fuel heat sink heat exchanger (326), wherein the fuel system (304) further comprises a second fuel tank (312), and wherein thermal management system (308) further comprises a second fuel heat sink heat exchanger (326) in selective thermal communication with the thermal fluid loop (320), the second fuel tank (312), or both.

13. The aircraft system (300) of any preceding claim, wherein the fuel heat sink heat exchanger (326) is integrated into the fuel tank (312).

14. A method (400) of operating a thermal management system (308) for an aircraft (100), the method comprising:
(402) adding heat to a flow of thermal fluid through a main passage (256) of a thermal fluid loop (320) with a heat source heat exchanger (322) thermally coupled to a component module (318) of an electric drive assembly (306);
(404) rejecting heat from the flow of thermal fluid through the main passage (256) of the thermal fluid loop (320) with an airflow heat sink heat exchanger (324) in thermally coupled to a cooling airflow (332);
(406) directing at least a portion of the flow of the thermal fluid through the main passage (256) of the thermal fluid loop (320) through a supplemental portion of the thermal fluid loop (320); and
(408) exchanging heat from the thermal fluid directed through the supplemental portion of the thermal fluid loop (320) to a fuel flow through an auxiliary loop (338) in fluid communication with a fuel tank (312) of the aircraft (100), wherein the auxiliary loop (338) is separate from a fuel delivery system (314) fluidly coupled to the fuel tank (312).

15. The method of claim 14, further comprising:
(410) operating the thermal management system (308) in a first operating condition, and wherein operating the thermal management system (308) in the first operating condition comprises: (406) directing at least the portion of the flow of the cooling fluid through the main passage (256) through the supplemental portion with the active control switch valve (336), and (408) exchanging heat from the thermal fluid directed through the supplemental portion of the thermal fluid loop (320) to the fuel flow through the auxiliary loop (338).
